# EUROPEAN PATENT APPLICATION

(11) **EP 1 582 451 A1**
(43) Date of publication of application: **05.10.2005**
(21) Application number: 05102322.4
(22) Date of filing: 23.03.2005
(51) Int. Cl.: B62M 23/02, A63B 69/16, B62K 15/00

(54) **Motorised bicycle**

(30) Priority: 02.04.2004 ES 200400805
(71) Applicant: Badia I Farre, Jordi, 08028 Barcelona (ES)
(72) Inventor: Badia I Farre, Jordi, 08028 Barcelona (ES)
(74) Representative: Ponti Sales, Adelaida

(57) **Abstract**

Motorised bicycle that includes means storing the energy that drives a motor (20) and is characterised in that it includes a support (22) provided with means for charging the means for storing the energy generated by pedaling the bicycle. Thanks to these characteristics, with the motorised bicycle of the invention it is possible to use and to store for other purposes the energy employed by the user during the physical exercise carried out with the bicycle itself. Fig.3

## Description

This invention relates to a motorised bicycle.

### BACKGROUND OF THE INVENTION

Known in the art are motorised bicycles that include a motor powered by battery, which motor is mounted directly onto the rear-wheel axle of the bicycle. This arrangement of the motor leaves greater space available for the battery that is situated on the rear part of the bicycle frame. Said battery has an ignition key fitted in series with another provided on the frame of the bicycle, in such a way that either of them can be used to actuate or deactivate the motor.

Also known are foldable motorised bicycles on which the frame usually has two parts linked to each other so that one can be folded over the other and thus reduce the total volume of the bicycle, permitting it to be transported more conveniently and allowing the bicycle to be stowed in small spaces, such as in the workplace.

The folding means so far known nevertheless present the disadvantage of being complex. Moreover, said folding is usually implemented around a vertically rotating spindle, so that in order to swivel the two parts of the bicycle it has to be lifted from the ground and sufficient space has to be available to carry out the rotation of one wheel over the other.

Users of motorised bicycles are usually city-dwellers who like to undertake physical exercise frequently, but who wish to avoid the disadvantages arising from excessive fatigue when traveling, for example, to their workplace.

The motorised bicycles known to date have the disadvantage that the battery is recharged with energy supplied by the mains electricity network.

No motorised bicyles are known that permit the battery to be recharged using the energy generated with said bicycle by the user's physical activity.

### DESCRIPTION OF THE INVENTION

The objective of this invention is to resolve the aforeaid disadvantages by implementing a foldable motorised bicycle that resolves the above-mentioned disadvantages.

In accordance with this objective, the motorised bicycle of this invention includes means for storing the energy that drives a motor and means for folding said bicycle, and is characterised in that it includes a support provided with means for charging the means for storing the energy generated by pedaling the bicycle.

Thanks to these characteristics, with the motorised bicycle of the invention it is possible to use and to store for other purposes the energy employed by the user during the physical exercise carried out with the bicycle itself.

Users can thus carry out physical exercise in their homes with the bicycle of the invention, using said bicycle as a static bicycle, while at the same time storing said energy on the bicycle in order, for example, to drive its motor, thereby transporting them without fatigue or effort to their workplaces.

Preferably, said motor is electric, said means for storing energy comprise a battery and said means for charging the means for storing the energy comprise an electrical generator.

The battery accumulates direct current that can be used to drive the motor of the bicycle or to recharge mobile telephones, portable computers or small household electrical appliances. Similarly, said direct current can be converted into alternating current through a transformer in order to use it for lighting or for other household electrical appliances.

Advantageously, said electrical generator is said electric motor working inverted.

Alternatively, said motor is pneumatic, said means for storing the energy comprising a compressed air tank and said means for charging the means for storing the energy comprising a pneumatic compressor.

Advantageously, said compressed air tank is situated inside the frame.

Preferably, said pneumatic compressor is said pneumatic motor working inverted.

According to a preferred embodiment, said bicycle includes means for folding it. It is thereby easier to get said bicycle into dwellings or workplaces.

Preferably, the motorised bicycle of said preferred embodiment includes a frame and the means of folding comprise a substantially horizontal rotating spindle around which two halves of said frame swivel, and is characterised in that said rotating spindle is mounted inclined at an angle of between 3° and 30° in relation to a coplanar parallel spindle provided perpendicularly to said frame, such that said rotating spindle permits said two halves to be rotated to a position in which the front and rear wheels are superimposed.

Thanks to these characteristics, the folding of the bicycle of the invention can be carried out in a very simple manner and without complexity, around a horizontal rotating spindle, without the wheels being left aligned.

The angle of inclination of the horizontal rotating spindle around which the two halves of the frame swivel permits the two wheels to be superimposed solely by carrying out a single movement and without need to lift the bicycle from the ground. Similarly, the means described make folding possible in particularly tight spaces, as the front wheel does not have to rotate in a fanlike motion into order to fold onto the rear wheel.

Preferably, said frame includes means for fixing the position of the handlebar and of the supporting fork of the front wheel, once said handlebar has been folded. Thus is achieved the fixing of the parallel position of the handlebar and of the front wheel in relation to the rear wheel at the end of the folding. Thanks to the parallel arrangement of the wheels it is possible to transport the bicycle folded simply by walking alongside it, and thereby with no need to lift it.

Advantageously, said handlebar includes means for actuating said motor at low speed, once said bicycle has been folded, so that said folded bicycle moves driven by said motor, for example to mount the steps of a property.

### BRIEF DESCRIPTION OF THE DRAWINGS

For a better understanding of all that has been outlined some drawings are enclosed to show, schematically and solely by way of non-restrictive example, a practical case of embodiment.

In said drawings,
Figure 1 is an elevation view of a preferred embodiment of the bicycle of the invention.
Figure 2 is a plan view of said preferred embodiment.
Figure 3 is an elevation view of said preferred embodiment that shows a support provided with means for charging the battery.
Figure 4 shows three views corresponding to the stages of the bicycle folding procedure.
Figure 5 is a rear view of the bicycle folded before folding the handlebar.
Figure 6 is a rear view of the bicycle folded after folding the handlebar.

### DESCRIPTION OF A PREFERRED EMBODIMENT

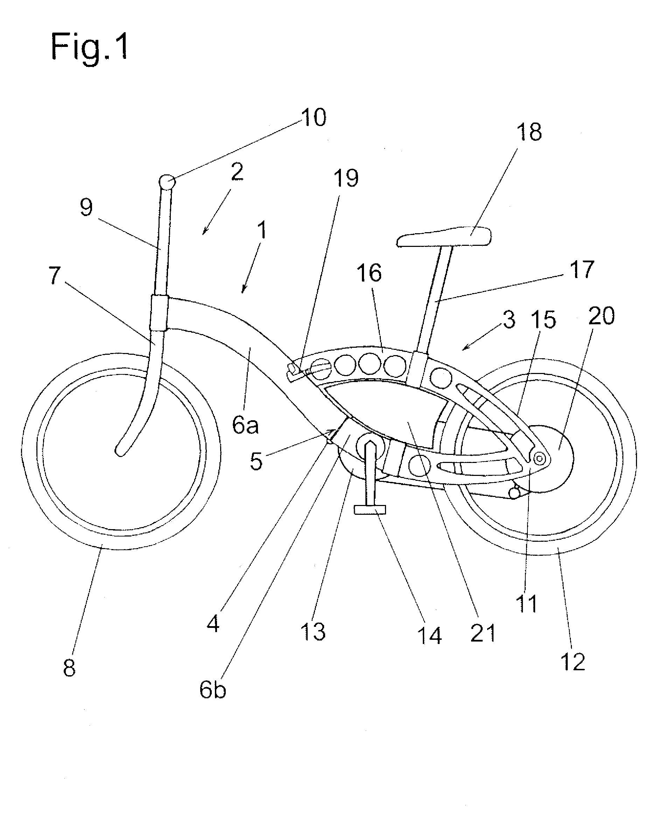

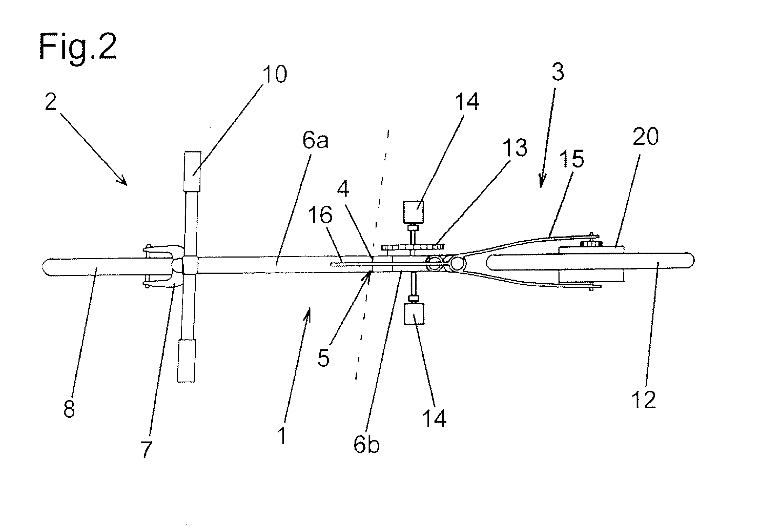

Figures 1 and 2 show elevation and plan views of the motorised bicycle of this invention that includes a frame or chassis 1 which includes a first front half 2 and a second rear half 3 which are articulated onto the horizontal spindle 4 of the rotating joint 5.

The first front half 2 of the frame 1 comprises a first half 6a with arm 6 to which are attached a fork 7 for fitting of the front wheel 8 and the bar 9 of the handlebar 10.

The second rear half 3 of the frame includes a second half 6b with arm 6 to which is attached a fork 11 for fitting of the rear wheel 12 and the plate 13 onto which the cranks of the pedals 14 are mounted. Said second rear half 3 of the frame is supplemented by a second fork 15 of the rear wheel 12 which is prolonged above the arm 6 into a structure 16 that supports the post 17 of the saddle 18. Said structure 16 includes means 19 for keeping it attached to the first arm 6a with arm 6, which means also act as a retaining mechanism for the rotating joint 5.

The electric motor 20 of the motorised bicycle of this embodiment is mounted onto the axle of the rear wheel 12, while the battery 21 that provides power for said motor 20, which is removable, is located between the structure 16 that supports the post 17 of the saddle 18 and the second half 6b with arm 6.

As can be seen in the plan view of Figure 2, the spindle 4 of the rotating joint 5 is offset at an angle of approximately 7.5° in relation to a coplanar spindle provided perpendicularly to said frame 1. As will be explained below, the inclination presented by the spindle 4 of said joint 5 enables the wheels to be superimposed at the end of folding of the bicycle.

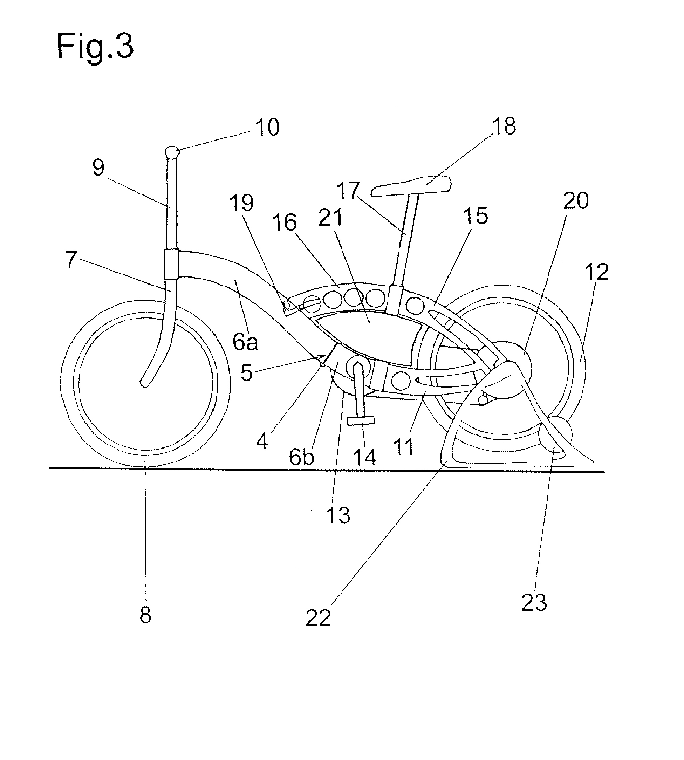

Figure 3 shows an elevation view of the bicycle of the invention mounted on a support 22 provided with an electrical generator 23 for charging the battery 21 of the bicycle. The bicycle mounted on the support 22 is suspended by the rear wheel 12, so that the user can carry out physical exercise by pedaling, as if it were a static bicycle. The energy employed by the user to move the axle of the rear wheel 12 is converted into electrical energy by means of the electrical generator 23, and stored in the battery 21.

The motorised bicycle described has the advantage that, by having said support 22 and said electrical generator 23, it allows the energy employed in carrying out the physical exercise to be used to drive the motor 20 of the bicycle. The user can thus use the same bicycle both as a gymnasium appliance and a means of transport for traveling, for example, to work, without physical effort and at no cost at all. Moreover, the bicycle of this invention has the advantage of having a very simple folding procedure that can be carried out in small spaces, thus making it very suitable for stowing at the workplace or at home.

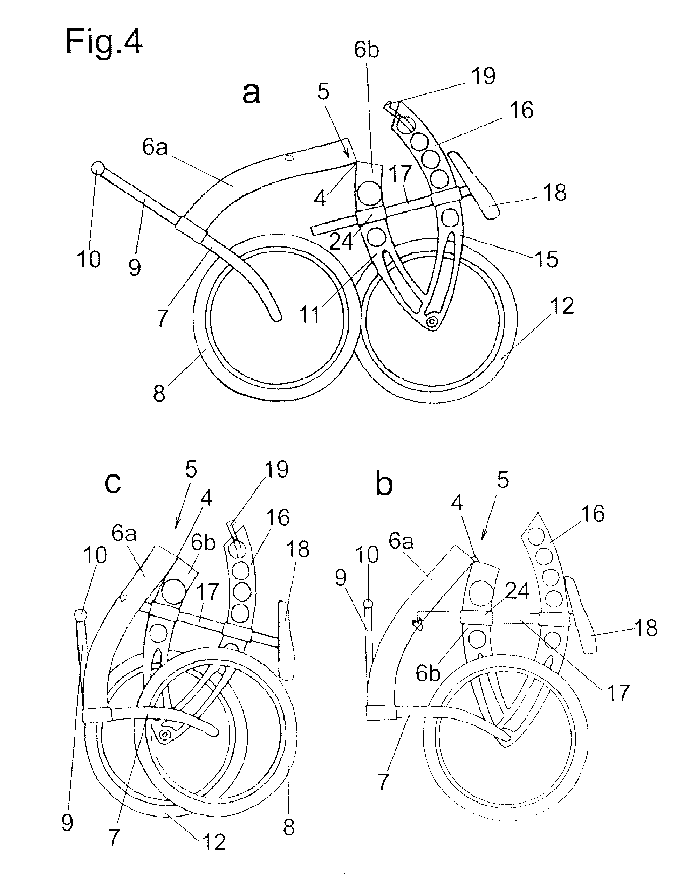

Figure 4 shows three views pertaining to the stages of the bicycle folding procedure, as set out below.

Firstly, and before proceeding to folding of the bicycle as such, the saddle 18 has to be placed in low position, by inserting the free end of the post 17 of said saddle 18 into a tubular element 24 in the second half 6b of the arm 6, through a hole that passes into the body of the battery 21. The folding procedure then starts by acting on the retaining means 19 of the rotating joint 5 in order to release the structure 16 that is supported partly now by the post 17 of the saddle 18. As the rotating joint 5 is left free, the two halves of the frame 1 swivel around the horizontal spindle 4. As can be seen from the folding figures, the two wheels of the bicycle are left superimposed, since the horizontal spindle 4 of the joint 5 is inclined in relation to a coplanar spindle provided perpendicularly to said frame 1. Thus, with only one movement, and always by rolling along the ground, easy folding of the bicycle is achieved.

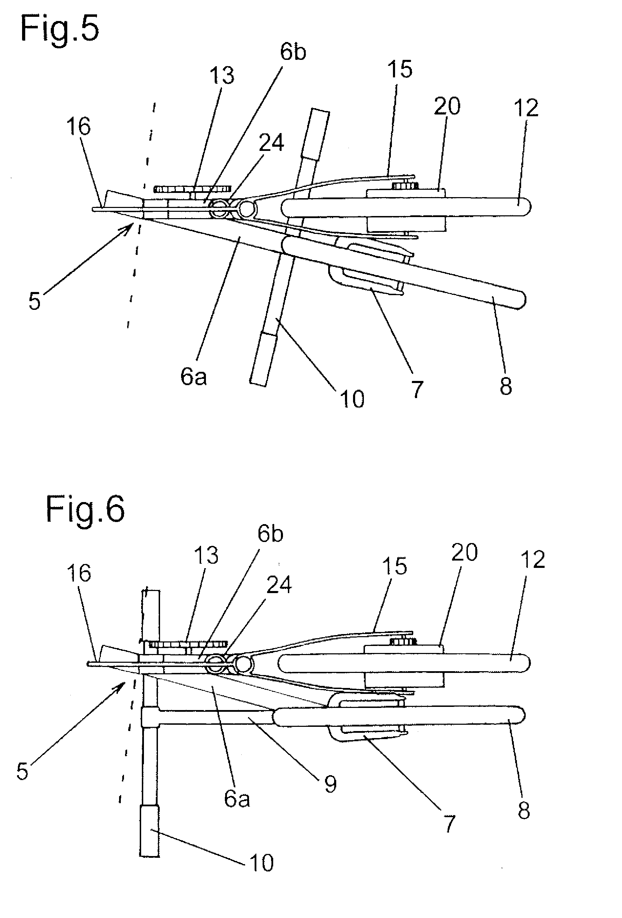

Once the two wheels have been folded, the bar 9 of the handlebar 10 is then folded. In the preferred embodiment described, the bar 9 is left partially concealed in a channel (not shown) made in the first half 6a of the arm 6. When the bar 9 is partially inserted into said channel, its position and that of the front wheel 8 supporting fork 7 is left fixed, so that said front wheel 8 remains parallel in relation to the rear wheel 12. Figures 5 and 6 show views of the folded bicycle in which the different positions the wheels are left in before and after folding the bar 9 of the handlebar 10 can be appreciated

Thanks to the parallel arrangement in which the wheels are left once the folding procedure has been completed, it is possible to transport the folded bicycle simply by accompanying it, and thus without any need to lift it.

Views b) and c) of Figure 4 show two final folding positions. In view b), the bicycle remains folded with the free end of the post 17 of the saddle 18 secured to the first half 6a of the arm 6. View c) corresponds to the position of maximum folding, which is achieved by crossing the two wheels over each other still further, for which the saddle 18 has to be placed in a slightly higher position.

## Claims

1. Motorised bicycle that includes means storing the energy that drives a motor (20), **characterised in that** it includes a support (22) provided with means for charging the means for storing the energy generated by pedalling the bicycle.

2. Motorised bicycle according to claim 1, **characterised in that** said motor (20) is electric and said means for storing energy comprise a battery (21).

3. Motorised bicycle according to claim 2, **characterised in that** said means for charging the means for storing the energy comprise an electrical generator (23) .

4. Motorised bicycle according to claim 3, **characterised in that** said electrical generator (23) is said electric motor (20).

5. Motorised bicycle according to claim 1, **characterised in that** said motor is pneumatic and said means for storing the energy comprise a compressed air tank.

6. Motorised bicycle according to claim 5, **characterised in that** said means for charging the means for storing the energy comprise a pneumatic compressor.

7. Motorised bicycle according to claim 6, **characterised in that** said pneumatic compressor is said pneumatic motor.

8. Motorised bicycle according to any of the preceding claims, **characterised in that** it includes means for folding said bicycle.

9. Motorised bicycle according to claim 8, which includes a frame (1) and whose means of folding comprise a substantially horizontal rotating spindle (4) around which two halves (6a, 6b) of said frame (1) swivel, **characterised in that** said rotating spindle (4) is mounted inclined at an angle of between 3° and 30° in relation to a coplanar parallel spindle provided perpendicularly to said frame (1), such that said rotating spindle (4) permits said two halves (6a, 6b) to be rotated to a position in which the front (8) and rear(12) wheels are superimposed.

10. Motorised bicycle according to claim 9, **characterised in that** said frame (1) includes means for fixing the position of the bar (9) of the handlebar (10) and of the supporting fork (7) of the front wheel (8), once said bar (9) of the handlebar (10) has been folded.

11. Motorised bicycle according to claim 10, **characterised in that** said handlebar (10) includes means for actuating said motor (20) at low speed, once said bicycle has been folded.
